(19) **Europäisches Patentamt**
**European Patent Office**
**Office européen des brevets**

(11) **EP 4 635 745 A1**

(12) **EUROPEAN PATENT APPLICATION**

(43) Date of publication:
**22.10.2025 Bulletin 2025/43**

(21) Application number: **25169631.6**

(22) Date of filing: **10.04.2025**

(51) International Patent Classification (IPC):
**B60C 1/00** (2006.01) **B60C 11/00** (2006.01)
**C08L 9/00** (2006.01)

(52) Cooperative Patent Classification (CPC):
(C-Sets available)
**C08L 9/00; B60C 1/0016; B60C 11/005;**
B60C 2011/0025 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **17.04.2024 JP 2024067052**

(71) Applicant: **Sumitomo Rubber Industries Ltd.**
**Kobe-shi, Hyogo 651-0072 (JP)**

(72) Inventor: **TORITA, Kazuya**
**Kobe, 651-0072 (JP)**

(74) Representative: **Forresters IP LLP**
**Skygarden**
**Erika-Mann-Straße 11**
**80636 München (DE)**

(54) **TIRE**

(57) **It** is an object of the present invention to provide a tire having improved overall performance of abrasion resistance and ride comfort. Provided is a tire comprising a tread part, wherein the tread part is composed of a rubber composition comprising a rubber component, carbon black, and a rubber powder, wherein C is greater than 20, where C represents a content, in parts by mass, of carbon black based on 100 parts by mass of the rubber component in the rubber composition, wherein the rubber powder comprises a sulfur element, wherein the rubber powder has a particle size of 40 mesh or more, wherein B is 0.100 or more, where B represents a BET specific surface area, in $m^2/g$, of the rubber powder, wherein T is 3.0 or more, where T represents a thickness, in mm, of the tread part, wherein A/T is less than 20, where A represents a content, in parts by mass, of the rubber powder based on 100 parts by mass of the rubber component in the rubber composition, and wherein $(C \times E)/(A \times B)$ is greater than 1000, where E represents a BET specific surface area, in $m^2/g$, of the carbon black.

**(Cont. next page)**

(52) Cooperative Patent Classification (CPC): (Cont.)

C-Sets
**C08L 9/00, C08L 7/00, C08L 19/003, C08L 91/00,
C08L 91/08, C08K 3/04, C08K 5/09, C08K 3/22,
C08K 5/18, C08K 3/06, C08K 5/47**

**Description**

TECHNICAL FIELD

The present invention relates to a tire.

BACKGROUND OF THE INVENTION

Various methods of improving abrasion resistance and ride comfort of a tire have been studied. For example, JP 2023-71373 A describes that a rubber composition for tire provides a good abrasion resistance during highspeed running, in which the rubber composition for tire comprises a predetermined amount of a rubber component, has a total styrene amount of less than 20% by mass in the rubber component, and has contents of silica, a butadiene rubber, and resin set in a predetermined relationship.

SUMMARY OF THE INVENTION

There is room for further improvement in overall performance of abrasion resistance and ride comfort.
It is an object of the present invention to provide a tire having improved overall performance of abrasion resistance and ride comfort.
The present invention relates to:

a tire comprising a tread part,
wherein the tread part is composed of a rubber composition comprising a rubber component, carbon black, and a rubber powder,
wherein C is greater than 20, where C represents a content, in parts by mass, of carbon black based on 100 parts by mass of the rubber component in the rubber composition,
wherein the rubber powder comprises a sulfur element,
wherein the rubber powder has a particle size of 40 mesh or more,
wherein B is 0.100 or more, where B represents a BET specific surface area, in $m^2/g$, of the rubber powder,
wherein T is 3.0 or more, where T represents a thickness, in mm, of the tread part,
wherein A/T is less than 20, where A represents a content, in parts by mass, of the rubber powder based on 100 parts by mass of the rubber component in the rubber composition, and
wherein $(C \times E)/(A \times B)$ is greater than 1000, where E represents a BET specific surface area, in $m^2/g$, of the carbon black.

According to the present invention, provided is a tire having improved overall performance of abrasion resistance and ride comfort.

BRIEF DESCRIPTION OF THE DRAWINGS

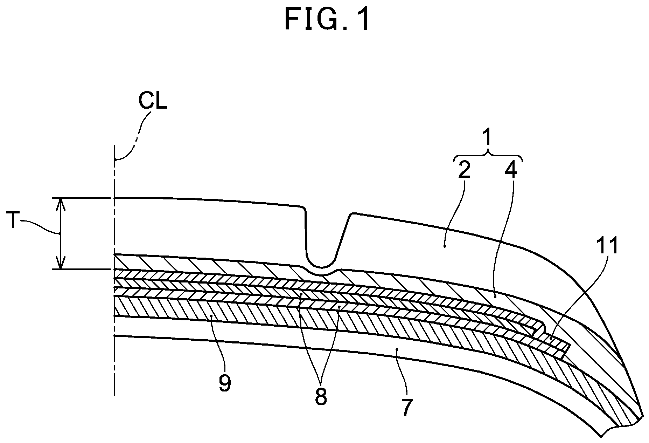

FIG. 1 is a cross-sectional view showing a part of a tire relating to one embodiment of the present invention.

DETAILED DESCRIPTION

The tire that is one embodiment of the present invention will be described below. The tire of the present embodiment is a tire comprising a tread part, wherein the tread part is composed of a rubber composition comprising a rubber component, carbon black, and a rubber powder, wherein C is greater than 20, where C represents a content, in parts by mass, of carbon black based on 100 parts by mass of the rubber component in the rubber composition, wherein the rubber powder comprises a sulfur element, wherein the rubber powder has a particle size of 40 mesh or more, wherein B is 0.100 or more, where B represents a BET specific surface area, in $m^2/g$, of the rubber powder, wherein T is 3.0 or more, where T represents a thickness, in mm, of the tread part, wherein A/T is less than 20, where A represents a content, in parts by mass, of the rubber powder based on 100 parts by mass of the rubber component in the rubber composition, and wherein $(C \times E)/(A \times B)$ is greater than 1000, where E represents a BET specific surface area, in $m^2/g$, of the carbon black.
Although it is not intended to be bound by a theory, for example, the following can be considered as a reason why the present invention provides a tire having improved overall performance of abrasion resistance and ride comfort.
First, (1) the rubber composition constituting the tread part comprises a rubber component and a rubber powder, the rubber powder comprising a sulfur element, thereby cross-linking the rubber powder and the rubber component, which contributes to an improvement in reinforcing property of the rubber composition. (2) The rubber powder has a particle size of 40 mesh or more and a BET specific surface area of 0.100 m$^2$/g or more, so that a reinforcing effect of the rubber powder is further improved. Moreover, (3) the content C of the carbon black is set to greater than 20 parts by mass, thereby contributing to an improvement in abrasion resistance. (4) When the thickness T of the tread part is 3.0 mm or more, shock received by a tread surface from a road surface can be absorbed, thereby contributing to an improvement in ride comfort of the tire. (5) When A/T is set to less than 20 and the content A of the rubber powder is reduced relative to the thickness T of the tread part, concentration of stress on the tread surface is prevented, thereby contributing to an improvement of the reinforcing effect of the tread part on an inner side in a tire radial direction. Furthermore, (6) when (C×E)/(A×B) is set to greater than 1000, carbon black can be arranged which has an amount and a particle size that can adequately reinforce the rubber component in a gap between rubber powders, thereby contributing to an improvement of the reinforcing effect.

It is considered that, with cooperation of the above-described (1) to (6), a remarkable effect of improving the overall performance of abrasion resistance and ride comfort is achieved.

The A/T is preferably less than 10.

This is because a reinforcing effect is also produced on the inner side of the tread part in the tire radial direction, and it is considered that abrasion resistance is further improved.

The (C×E)/(A×B) is preferably greater than 2000.

This is because the reinforcing effect of the rubber composition constituting the tread part is further enhanced, and it is considered that abrasion resistance is further improved.

Regarding the C and the T, C×T is preferably greater than 100.

When the content of the carbon black is low, a reinforcing property of the tread part is secured by increasing the thickness of the tread part, and it is considered that abrasion resistance is further improved.

The E, in m$^2$/g, is preferably greater than 100.

When the BET specific surface area of carbon black is increased, carbon black can further reinforce the rubber component in the gap between the rubber powders, and it is considered that abrasion resistance is further improved.

The rubber component preferably comprises 30% by mass or more of an isoprene-based rubber.

When the content of the isoprene-based rubber is within the above-described range, breaking strength of the rubber composition can be increased, and it is considered that abrasion resistance is further improved.

From the viewpoint of further improving abrasion resistance, the rubber component preferably comprises 50% by mass or more of a butadiene rubber.

[Definitions]

A "tread part" is a member comprising a part that forms a ground-contacting surface of a tire, and in a case where the tire comprises a member that forms a tire skeleton from steel or a textile material such as a belt layer, a belt reinforcing layer, a carcass, and the like, on a cross section in a tire radial direction, it is a member arranged on an outer side therefrom in the tire radial direction.

A "standardized state" is a state where a tire is rim-assembled on a standardized rim and air under a standardized internal pressure is filled, and no load is applied.

A "standardized rim" is a rim in a standard system including a standard on which the tire is based, defined by the standard for each tire. For example, the "standardized rim" refers to a standard rim of an applicable size described in "JATMA YEAR BOOK" in JATMA (The Japan Automobile Tyre Manufacturers Association, Inc.), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.), to which references are made in this order, and if there is an applicable size at the time of the reference, the rim conforms to its standard. Besides, in a case of tires that are not defined by the standard, the standardized rim shall refer to one which can be assembled to the tire and whose width is narrowest among rims having the smallest diameter that can maintain an internal pressure (i.e., do not cause air leakage between the rim and the tire).

A "standardized internal pressure" is an air pressure in a standard system including a standard on which the tire is based, defined by the standard for each tire, for example, it refers to a "MAXIMUM AIR PRESSURE" in JATMA, "INFLATION PRESSURE" in ETRTO, or a maximum value described in Table "TIRE LOAD LIMITS AT VARIOUS COLD INFLATION PRESSURES" in TRA, to which references are made in this order as in the case of the standardized rim, and if there is an applicable size at the time of the reference, the standardized internal pressure conforms to its standard. Besides, in a case of tires that are not defined by the standard, the standardized internal pressure shall refer to a standardized internal pressure (250 KPa or more) of another tire size (specified in the standard) for which the standardized rim is described as a standard rim, and when a plurality of standardized internal pressures of 250 KPa or more are described, it shall refer to the minimum value among them.

A "standardized load, in kg" is a load in a standard system including a standard on which the tire is based, defined by the standard for each tire, for example, a "MAXIMUM LOAD CAPACITY" in JATMA, a "LOAD CAPACITY" in ETRTO, or a maximum value described in Table "TIRE LOAD LIMITS AT VARIOUS COLD INFLATION PRESSURES" in TRA, to which references are made in this order as in cases of a standardized rim and a standardized internal pressure, and if there is an applicable size at the time of the reference, the load conforms to its standard. Then, in a case of tires that are not defined by the standard, the maximum load capacity WL calculated separately is defined as a standardized load.

The "maximum load capacity WL, in kg" is calculated by the following equations. Wherein "V" is a virtual volume, in mm$^3$, of a tire, "Dt" is a tire outer diameter, in mm, in a standardized state, "Ht" is a tire cross-sectional height, in mm, in a tire radial direction on a cross section of the tire in a plane including a tire rotation axis, and "Wt" is a tire cross-sectional width, in mm, in a standardized state. When R represents a rim diameter of the tire, Ht can be calculated by (Dt-R)/2. Wt is a value obtained by excluding, if any, patterns or characters on the side surface of the tire. Besides, the "maximum load capacity" has the same meaning as the above-described standardized load.

$$W_L = 0.000011 \times V + 175$$

$$V = \{(Dt/2)^2 - (Dt/2 - Ht)^2\} \times \pi \times Wt$$

A "thickness T, in mm, of a tread part" is a thickness of the entire tread part as measured along a normal line to a tread grounding surface on a tire equator in a cross section passing through a tire rotation axis. In a case where a circumferential groove is present on a tire equator, the thickness T is a thickness measured along a normal line to a tread grounding surface on a central part in a tire width direction of a land part in which the central part in the tire width direction of the land part is closest to a tire equatorial plane, of land parts present on both lateral sides in a tire width direction of the groove.

A "rubber powder" is specified in JIS K 6200:2019. The rubber powder specified in JIS K 6200:2019 is "a rubber fine powder, a rubber powder, a rubber pellet, a rubber chip, or the like as obtained by pulverizing a vulcanized rubber, or one in which metal pieces, fibers, soil, and other foreign substances cannot be visually recognized in a rubber produced during steps".

A "particle size of a rubber powder" is an average particle size on a mass basis calculated from a particle size distribution measured in accordance with JIS K 6316:2017 "Vulcanized Crumb Rubber-test Methods" using a test sieve specified in JIS Z 8801-1:2019.

A "BET specific surface area of a rubber powder" can be calculated by JIS Z 8830: BET One-Point Method (adsorption gas: nitrogen).

A "BET specific surface area of carbon black" is measured according to JIS K 6217-2:2017 "Carbon black for rubber industry-Fundamental characteristics-Part 2: Determination of specific surface area-Nitrogen adsorption methods-Single-point procedures".

A "cis content (cis-1,4-bond butadiene unit amount)" is a value calculated by pyrolysis gas chromatography, and is applied to, for example, a rubber component having a repeating unit derived from a butadiene, such as an SBR, a BR, and the like. Besides, in the present specification, "pyrolysis gas chromatography" refers to a method of heating a sample in a pyrolyzer, separating individual components contained in gas phase components generated by this heating using a separation column, and analyzing each separated component.

A "weight-average molecular weight (Mw)" can be calculated in terms of a standard polystyrene based on measurement values obtained by a gel permeation chromatography (GPC) (e.g., GPC-8000 Series manufactured by Tosoh Corporation, detector: differential refractometer, column: TSKgel (Registered trademark) SuperMultiporeHZ-M manufactured by Tosoh Corporation). For example, it is applied to an SBR, a BR, a plasticizing agent, and the like.

An "average primary particle size of carbon black" is a value obtained by photographing particles using a transmission or scanning electron microscope and calculating an arithmetic average of particle sizes of 400 particles. If a shape of the particle is spherical, a diameter of the sphere is defined as a particle size, and if the shape is other than spherical, a circle equivalent diameter (positive square root of $\{4 \times (\text{area of particle})/\pi\}$) is calculated from the microscope image to be defined as a particle size.

A "plasticizing agent" is a material that imparts plasticity to a rubber component, which is a component extracted from a rubber composition using acetone. Moreover, the plasticizing agent includes a plasticizing agent that is liquid (in a liquid state) at 25°C and a plasticizing agent that is solid at 25°C. However, it shall not comprise wax and stearic acid commonly used in the tire industry.

A "content of a plasticizing agent" also includes an amount of a plasticizing agent in a rubber component extended by the plasticizing agent.

[Tire]

The tire relating to one embodiment of the present invention will be described below with reference to the drawings. The tire relating to the present embodiment comprises a tread part, wherein the tread part is composed of a rubber composition comprising a rubber component, carbon black, and a rubber powder, wherein C is greater than 20, where C represents a content, in parts by mass, of carbon black based on 100 parts by mass of the rubber component in the rubber composition, wherein the rubber powder comprises a sulfur element, wherein the rubber powder has a particle size of 40 mesh or more, wherein B is 0.100 or more, where B represents a BET specific surface area, in $m^2/g$, of the rubber powder, wherein T is 3.0 or more, where T represents a thickness, in mm, of the tread part, wherein A/T is less than 20, where A represents a content, in parts by mass, of the rubber powder based on 100 parts by mass of the rubber component in the rubber composition, and wherein $(C \times E)/(A \times B)$ is greater than 1000, preferably greater than 1500, where E represents a BET specific surface area, in $m^2/g$, of the carbon black. Besides, embodiments shown below are merely examples, and the tire of the present invention is not limited to the following embodiments.

FIG. 1 is a view showing a part of a cross section passing through a tire rotation axis of a tread part of a tire relating to one embodiment of the present invention. The tire in FIG. 1 comprises a tread part 1 that comes into contact with the ground during running and a belt layer 8 on the inner side in the tire radial direction. A carcass 9 and an inner liner 7 are laminated on the lower part of the belt layer 8. Moreover, a band may be present between the tread part 1 and the belt layer 8. In FIG. 1, the belt layer 8 is laminated in two layers, and a band 11 having a jointless structure is arranged inside a base rubber layer 4.

The tread part 1 in FIG. 1 has two layers: a cap rubber layer 2 including a tire ground-contacting surface; and a base rubber layer 4 adjacent to an inner side in a tire radial direction of a cap rubber layer 2. The tread part 1 relating to the present embodiment can have a single layer or two or more layers, and preferably has two or more layers. When the tread part has two or more layers, for example, the tread part 1 can be a tread part consisting of two layers of a cap rubber layer 2 and a base rubber layer 4, as shown in FIG. 1. Moreover, one or more intermediate rubber layers may be further provided between the cap rubber layer 2 and the base rubber layer 4, and one or more under tread layers may be further provided between the base rubber layer 4 and the belt layer 8.

The thickness T of the tread part is 3.0 mm or more, preferably 3.2 mm or more, more preferably 3.4 mm or more, further preferably 3.5 mm or more, particularly preferably 3.7 mm or more, from the viewpoint of ride comfort. Moreover, an upper limit value of the thickness T of the tread part is, but not particularly limited to, preferably 15.0 mm or less, more preferably 10.0 mm or less, further preferably 8.0 mm or less, particularly preferably 7.0 mm or less.

A/T is less than 20, preferably less than 16, more preferably less than 10, from the viewpoint of the effects of the present invention. Moreover, A/T is preferably greater than 1.5, more preferably greater than 2.0, further preferably greater than 2.5. A is a content of a rubber powder based on 100 parts by mass of a rubber component in a rubber composition constituting a tread part, and a preferred range of A will be mentioned later.

$(C \times E)/(A \times B)$ is greater than 1000, preferably greater than 1500, more preferably greater than 2000, further preferably greater than 2500, further preferably greater than 3000, particularly preferably greater than 3500, from the viewpoint of the effects of the present invention. Moreover, $(C \times E)/(A \times B)$ is preferably less than 8000, more preferably less than 7500, further preferably less than 7000. Ranges of B and E will be mentioned later.

$C \times T$ is preferably greater than 100, more preferably greater than 120, further preferably greater than 145, further preferably greater than 160, particularly preferably greater than 180. Moreover, $C \times T$ is preferably less than 300, more preferably less than 280, further preferably less than 270. C is a content of carbon black based on 100 parts by mass of a rubber component in a rubber composition constituting a tread, and a range of C will be mentioned later.

C/A is preferably 5 or more, more preferably 6 or more, further preferably 7 or more. An upper limit of C/A is not particularly limited, but can be, for example, 20 or less.

$A \times T$ is preferably 50 or less, more preferably 45 or less, further preferably 40 or less. A lower limit of $A \times T$ is not particularly limited, but can be, for example, 10 or more.

$B \times E$ is preferably 15 or more, more preferably 20 or more, further preferably 25 or more. An upper limit of $B \times E$ is not particularly limited, but can be, for example, 50 or less.

When the rubber composition constituting the tread part has two or more layers, any one of the layers of the rubber compositions constituting the tread part has only to satisfy the C, the B, the A, the A/T, and $(C \times E)/(A \times B)$, but it is preferable that the cap rubber layer satisfies them.

[Rubber composition]

A rubber composition constituting a tread part of the tire of the present embodiment will be described below. The rubber composition relating to the present embodiment comprises a rubber component, carbon black, and a rubber powder.

<Rubber component>

The rubber component preferably comprises a diene-based rubber. A content of the diene-based rubber in the rubber component is preferably 90% by mass or more, more preferably 95% by mass or more, further preferably 98% by mass or more. The rubber component can be a rubber component consisting of a diene-based rubber.

As the diene-based rubber, any of those usually used in the tire industry can be appropriately used. Specifically, examples of the diene-based rubber include, for example, an isoprene-based rubber, a butadiene rubber (BR), a styrene-butadiene rubber (SBR), a styrene-isoprene rubber (SIR), a styrene-isoprene-butadiene rubber (SIBR), a chloroprene rubber (CR), an acrylonitrile-butadiene rubber (NBR), and the like. These diene-based rubbers may be used alone, or two or more thereof may be used in combination.

(Isoprene-based rubber)

As an isoprene-based rubber, for example, those common in the tire industry can be used, such as an isoprene rubber (IR), a natural rubber, and the like. Examples of the natural rubber include a non-modified natural rubber (NR), as well as a modified natural rubber such as an epoxidized natural rubber (ENR), a hydrogenated natural rubber (HNR), a deproteinized natural rubber (DPNR), an ultra pure natural rubber, a grafted natural rubber, and the like. These isoprene-based rubbers may be used alone, or two or more thereof may be used in combination.

A NR is not particularly limited, and those common in the tire industry can be used, examples of which include, for example, SIR20, RSS#3, TSR20, and the like.

A content of an isoprene-based rubber in the rubber component is preferably 20% by mass or more, more preferably 30% by mass or more, further preferably 35% by mass or more, from the viewpoint of abrasion resistance. Moreover, it is preferably 80% by mass or less, more preferably 70% by mass or less, further preferably 65% by mass or less, from the viewpoint of improving dispersibility of a filler.

(BR)

A BR is not particularly limited, and those common in the tire industry can be used such as, for example, a BR having a cis content of less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (an SPB-containing BR), a modified BR (a high cis modified BR, a low cis modified BR), and the like. These BRs may be used alone, or two or more thereof may be used in combination.

As the high cis BR, for example, those commercially available from Zeon Corporation, UBE Corporation, JSR Corporation, etc. can be used. When the high cis BR is compounded, low temperature characteristics and abrasion resistance can be improved. A cis content of the high-cis BR is preferably greater than 95 mol%, more preferably greater than 96 mol%, further preferably greater than 97 mol%. Besides, the cis content of the BR is measured by the above-described measuring method.

The rare-earth-based BR includes those which are synthesized using a rare-earth element-based catalyst and have a vinyl content of preferably less than 1.8 mol%, more preferably less than 1.6 mol%, further preferably 1.5 mol% or less and a cis content of preferably greater than 95 mol%, more preferably greater than 96 mol%, further preferably 97 mol% or more. As the rare-earth-based BR, for example, those commercially available from LANXESS, etc. can be used.

Examples of the SPB-containing BR include those in which 1,2-syndiotactic polybutadiene crystal is chemically bonded with BR and dispersed, but not those in which the crystal is simply dispersed in the BR. As such an SPB-containing BR, those commercially available from UBE Corporation, etc. can be used.

As the modified BR, for example, a modified butadiene rubber (modified BR) modified at its terminal and/or main chain with a functional group comprising at least one element selected from the group consisting of silicon, nitrogen, and oxygen can be appropriately used.

Examples of other modified BRs include those obtained by adding a tin compound after polymerizing 1,3-butadiene by a lithium initiator, the end of which is further bonded by tin-carbon bond (tin-modified BR), and the like. Moreover, the modified BR may be either non-hydrogenated or hydrogenated.

A weight-average molecular weight (Mw) of a BR is preferably greater than 300,000, more preferably greater than 350,000, further preferably greater than 400,000, from the viewpoint of abrasion resistance. Moreover, it is preferably less than 2,000,000, more preferably less than 1,000,000, further preferably less than 500,000, from the viewpoints of cross-linking uniformity, etc. Besides, the Mw can be calculated by the above-described method.

A content of a BR in the rubber component is preferably 40% by mass or more, more preferably 50% by mass or more, further preferably 55% by mass or more, from the viewpoint of improving dispersibility of a filler. Moreover, the content of the BR in the rubber component is preferably 90% by mass or less, more preferably 80% by mass or less, further preferably 70% by mass or less, from the viewpoint of abrasion resistance.

(SBR)

An SBR is not particularly limited, examples of which include a solution-polymerized SBR (S-SBR), an emulsion-polymerized SBR (E-SBR), modified SBRs (a modified S-SBR, a modified E-SBR) thereof, and the like. Examples of the modified SBR include an SBR modified at its terminal and/or main chain, a modified SBR coupled with tin, a silicon compound, etc. (a modified SBR of condensate or having a branched structure, etc.), and the like. Furthermore, hydrogenated ones of these SBRs (hydrogenated SBRs) and the like can also be used. These SBRs may be used alone, or two or more thereof may be used in combination.

As an SBR, an oil-extended SBR can be used, or a non-oil-extended SBR can be used. In the present specification, as SBRs, those commercially available from JSR Corporation, Sumitomo Chemical Co., Ltd., UBE Corporation, Asahi Kasei Corporation, ZS Elastomer Co., Ltd., ARLANXEO, etc. can be used.

A content of an SBR in the rubber component is preferably less than 50% by mass, more preferably less than 30% by mass, further preferably less than 20% by mass, particularly preferably less than 10% by mass. The rubber composition relating to the present embodiment may not comprise an SBR as a rubber component. A content of an SBR when compounded in the rubber component is preferably 1% by mass or more.

(Other rubber components)

The rubber component may comprise rubber components other than diene-based rubbers (non-diene-based rubbers) as long as they do not affect the effects of the present invention. As the non-diene-based rubbers, rubber components commonly used in the tire industry can be used, examples of which include, for example, a butyl-based rubber, an ethylene-propylene rubber, a polynorbornene rubber, a silicone rubber, a polyethylene chloride rubber, a fluorine rubber (FKM), an acrylic rubber (ACM), a hydrin rubber, and the like. These other rubber components may be used alone, or two or more thereof may be used in combination. Moreover, besides the above-described rubber components, the rubber component may or may not comprise a known thermoplastic elastomer.

(Rubber component synthesized from recycle-derived/biomass-derived raw material)

A monomer that is a structural unit of a synthetic rubber such as an SBR, a BR, and the like may be one derived from underground resources such as petroleum, a natural gas, and the like, or a recycled one from a rubber product such as a tire and the like or a non-rubber product such as polystyrene and the like. A monomer obtained by recycling (a recycled monomer) is not particularly limited, examples of which include a recycle-derived polyisoprene, a recycle-derived butadiene, a recycle-derived aromatic vinyl compound, and the like. Examples of the butadiene include 1,2-butadiene, 1,3-butadiene, and the like. The above-described aromatic vinyl compound is not particularly limited, examples of which include styrene and the like. Among them, a recycle-derived polyisoprene (a recycled polyisoprene) a recycle-derived butadiene (a recycled butadiene) and/or a recycle-derived styrene (a recycled styrene) are preferably used as a raw material.

A method of producing a recycled monomer is not particularly limited, examples of which include, for example, a method of synthesizing a monomer from a recycle-derived naphtha obtained by decomposing a rubber product such as a tire and the like. Moreover, a method of producing a recycle-derived naphtha is not particularly limited, and a recycle-derived naphtha may be obtained by, for example, decomposing a rubber product such as a tire and the like under high temperature and pressure, by decomposing it by microwaves, or by extruding it after mechanically pulverizing it.

Furthermore, a monomer that is a structural unit of a polymer such as an IR, an SBR, a BR, and the like may be a biomass-derived one. In the present specification, biomass refers to a material derived from natural sources such as plants and the like. Biomass is not particularly limited, examples of which include, for example, agricultural, forestry and fishery products, sugar, wood waste, a plant residue after acquisition of a useful component, a plant-derived ethanol, a biomass naphtha, and the like.

The biomass-derived monomer (biomass monomer) is not particularly limited, examples of which include a biomass-derived butadiene, a biomass-derived aromatic vinyl compound, and the like. Examples of the butadiene include 1,2-butadiene, 1,3-butadiene, and the like. The above-described aromatic vinyl compound is not particularly limited, examples of which include styrene and the like. Moreover, a method of producing a biomass monomer is not particularly limited, examples of which include, for example, one by a biological and/or a chemical and/or a physical conversion of animals and plants, and the like. A microbial fermentation is representative of biological conversion, and examples of chemical and/or physical conversion include one due to a catalyst, one due to a high heat, one due to a high pressure, one due to an electromagnetic wave, one due to a critical fluid, and combinations thereof.

A polymer synthesized from a biomass monomer component (biomass polymer) is not particularly limited, examples of which include a polybutadiene rubber synthesized from a biomass-derived butadiene, an aromatic vinyl/-butadiene copolymer synthesized from a biomass-derived butadiene and/or a biomass-derived aromatic vinyl compound, and the like. Examples of the aromatic vinyl/butadiene copolymer include, for example, a styrene-butadiene rubber synthesized from a biomass-derived butadiene and/or a biomass-derived styrene, and the like.

Whether a raw material of a polymer is derived from biomass can be determined by pMC (percent Modern Carbon) measured according to ASTM D6866-10. pMC is a ratio of $^{14}C$ concentration of a sample to $^{14}C$ concentration of a modern standard carbon (modern standard reference) and a value used as an index indicating a biomass ratio of a compound. A significance of this value is mentioned below.

In 1 mole of carbon atoms ($6.02 \times 10^{23}$ pieces), there are about $6.02 \times 10^{11}$ $^{14}C$ that are about one trillionth of the number of normal carbon atoms. A half-life of $^{14}C$ is 5730 years, and $^{14}C$ regularly decreases. Thus, in fossil fuels such as coal, petroleum, a natural gas, and the like, where it is considered that 226,000 years or more have passed since carbon dioxide in the atmosphere was absorbed by plants to be fixed, all of $^{14}C$ elements, which were contained in them at the beginning of fixation, decay. Therefore, in the present 21st century, fossil fuels such as coal, petroleum, a natural gas, and the like do not contain any $^{14}C$ element. Therefore, chemical substances produced using these fossil fuels as raw materials do not contain any $^{14}C$ element as well.

On the other hand, $^{14}C$ is constantly generated by cosmic rays causing nuclear reactions in the atmosphere. Thus, decrease in $^{14}C$ due to radioactive decay and generation of $^{14}C$ due to nuclear reactions are balanced, and the amount of $^{14}C$ has been constant in the Earth's atmospheric environment. Therefore, the $^{14}C$ concentration of substances derived from biomass resources that have been circulating in the current environment becomes a value of about $1 \times 10^{-12}$ mol% based on total C atoms, as described above. Accordingly, by utilizing a difference between these values, a biomass ratio in a certain compound can be calculated.

This $^{14}C$ is generally measured as follows. A $^{13}C$ concentration ($^{13}C/^{12}C$) and a $^{14}C$ concentration ($^{14}C/^{12}C$) are measured using an accelerator mass spectrometry based on a tandem accelerator. In the measurements, a $^{14}C$ concentration in a circulating carbon in nature as of 1950 is adopted as the modern standard reference for the $^{14}C$ concentration. As a specific reference material, an oxalic acid standard body provided by NIST (National Institute of Standards and Technology) is used. A specific radioactivity of carbon in this oxalic acid (radioactivity intensity of $^{14}C$ per gram of carbon) is sorted for each carbon isotope, $^{13}C$ is corrected to a constant value, and a value corrected for attenuation from 1950 to the date of measurement is used as a standard $^{14}C$ concentration value (100%). A ratio of this value to a value actually measured for a sample becomes a pMC value.

Thus, if a rubber is produced from a material derived from 100% biomass, the $^{14}C$ concentration shows a value of approximately 110 pMC as, currently, under a normal condition, it often does not reach 100, though there are regional differences and the like. On the other hand, if this $^{14}C$ concentration is measured for a chemical substance derived from a fossil fuel such as petroleum and the like, it shows a value of approximately 0 pMC (for example, 0.3 pMC). This value corresponds to a biomass ratio of 0% as mentioned above.

From above, it is appropriate in terms of environmental protection to use a material such as a rubber having a high pMC value, and the like, that is, a material such as a rubber having a high biomass ratio, and the like, for a rubber composition.

[Filler]

The rubber composition relating to the present embodiment comprises carbon black as a filler. The filler may be a filler consisting of carbon black.

<Carbon black>

Examples of carbon black include, but not particularly limited to, N134, N110, N220, N234, N219, N339, N330, N326, N351, N550, N762, and the like. A raw material of carbon black may be a biomass material such as lignin, a vegetable oil, and the like, or may be a pyrolysis oil obtained by pyrolyzing a waste tire. Moreover, a method of producing carbon black may be one by combustion such as a furnace method and the like, one by hydrothermal carbonization (HTC), or one by pyrolysis of methane such as a thermal black method and the like. As commercially available products, products from, Asahi Carbon Co., Ltd., Cabot Japan K.K., Tokai Carbon Co., Ltd., Mitsubishi Chemical Corporation, Lion Corporation, NIPPON STEEL Carbon Co. Ltd., Columbia Chemical Corporation, etc. can be used. These carbon black may be used alone, or two or more thereof may be used in combination.

Moreover, besides the above-described carbon black, from the viewpoint of life cycle assessment, carbon black made from a biomass material such as lignin and the like or a recovered carbon black obtained by pyrolyzing and refining a product including carbon black such as a tire and the like may be used as carbon black.

In the present specification, a "recovered carbon black" refers to carbon black obtained by pulverizing a product such as a used tire comprising carbon black and the like and baking the pulverized product, in which, when the product is subjected to oxidative combustion by heating in the air, using a thermal weight measurement method according to JIS K 6226-2:2003, a ratio of a mass of ash (ash content), which is a component that does not combust, is 13% by mass or more. That is, a ratio of a mass (carbon amount) of a weight loss content due to the oxidative combustion of the recovered carbon black is 87% by mass or less. The recovered carbon black may be expressed by rCB.

The recovered carbon black can be obtained from a pyrolysis process of a used pneumatic tire. For example, EP 3427975 A describes, with reference to "Rubber Chemistry and Technology", Vol. 85, No. 3, Pages 408 to 449 (2012), in particular, Pages 438, 440, and 442, that the recovered carbon black can be obtained by pyrolysis of an organic material at 550 to 800°C, excluding oxygen, or by vacuum pyrolysis at a relatively low temperature ([0027]). Such carbon black obtained from the pyrolysis process usually lacks a functional group on its surface, as mentioned in [0004] of JP 6856781 B (A comparison of surface morphology and chemistry of pyrolytic carbon blacks with commercial carbon blacks, Powder Technology 160 (2005) 190-193).

The recovered carbon black may lack a functional group on its surface or may be treated so that its surface comprises a functional group. The treatment performed so that the surface of the recovered carbon black comprises a functional group can be implemented by a conventional method. For example, in EP3173251 A, carbon black comprising a hydroxyl and/or carboxyl group on its surface is obtained by treating carbon black obtained from a pyrolysis process with potassium permanganate under an acidic condition. Moreover, in JP 6856781 B, carbon black whose surface is activated is obtained by treating carbon black obtained from a pyrolysis process with an amino acid compound comprising at least one thiol group or disulfide group. The recovered carbon black relating to the present embodiment also comprises carbon black whose surface has been treated so as to comprise a functional group.

As the recovered carbon black, those commercially available from Strebl Green Carbon Pte Ltd., LDC Co., Ltd., etc. can be used.

The BET specific surface area E of carbon black is preferably greater than 70 $m^2/g$, more preferably greater than 90 $m^2/g$, further preferably greater than 100 $m^2/g$, particularly preferably greater than 110 $m^2/g$, from the viewpoint of the effects of the present invention. Moreover, it is preferably less than 250 $m^2/g$, more preferably less than 200 $m^2/g$, further preferably less than 180 $m^2/g$, from the viewpoints of heat generation and processability. Besides, the BET specific surface area of carbon black is measured by the above-described measuring method.

The average primary particle size of carbon black is preferably greater than 9 nm, more preferably greater than 10 nm, further preferably greater than 12 nm. Moreover, the average primary particle size is preferably less than 51 nm, more preferably less than 50 nm, further preferably less than 45 nm. Besides, the average primary particle size of carbon black is measured by the above-described measuring method.

A content C of carbon black based on 100 parts by mass of the rubber component is greater than 20 parts by mass, more preferably greater than 30 parts by mass, further preferably greater than 40 parts by mass, particularly preferably greater than 50 parts by mass. Moreover, the content C of carbon black based on 100 parts by mass of the rubber component is preferably less than 120 parts by mass, more preferably less than 100 parts by mass, further preferably less than 80 parts by mass, particularly preferably less than 70 parts by mass.

<Other fillers>

The rubber composition relating to the present embodiment may comprise fillers other than carbon black. Other fillers are not particularly limited, and those conventionally and commonly used in the tire industry can be compounded, such as, for example, silica, aluminum hydroxide, calcium carbonate, alumina, clay, talc, and the like.

<Silica>

Silica is not particularly limited, and those common in the tire industry can be used, such as, for example, silica prepared by a dry process (anhydrous silica), silica prepared by a wet process (hydrous silica), and the like. A raw material of silica is not particularly limited, and may be, for example, mineral-derived raw materials such as quartz and the like, bio-derived raw materials such as rice husks and the like (e.g., silica made from a biomass material such as rice husks and the like), or silica recycled from a product containing silica. Among them, hydrous silica prepared by a wet process is preferable from the reason that it has many silanol groups. These silica may be used alone, or two or more thereof may be used in combination.

Silica made from a biomass material can be obtained by, for example, burning rice husks to obtain rice husk ashes, extracting silicate from the rice husk ashes using a sodium hydroxide solution, generating silicon dioxide by reacting the silicate with sulfuric acid in the same manner as for a conventional wet silica, and filtering, washing with water, drying and pulverizing precipitates of the silicon dioxide.

As silica recycled from a product containing silica, for example, silica recovered from an electronic component such as a semiconductor and the like, a tire, a product containing silica such as a desiccant, a filtering material such as diatomaceous earth and the like, etc. can be used. Moreover, a recovering method is not particularly limited, examples of which include pyrolysis, decomposition by electromagnetic waves, and the like. Among them, silica recovered from an electronic component such as a semiconductor and the like or from a tire is preferable.

When silica crystallizes, it is insoluble in water, and silicic acid that is a component thereof cannot be used. By controlling a burning temperature and a burning time, crystallization of silica in rice husk ashes can be suppressed (JP 2009-2594 A, Akita Prefectural University Web Journal B/2019, vol.6, p.216-222, etc.). As an amorphous silica extracted from rice husks, those commercially available from Wilmar, etc. can be used.

A content of silica when compounded bade on 100 parts by mass of the rubber component is preferably less than 100 parts by mass, more preferably less than 60 parts by mass, further preferably less than 30 parts by mass, further preferably less than 20 parts by mass, particularly preferably less than 10 parts by mass. Moreover, a lower limit value of the content of silica based on 100 parts by mass of the rubber component can be, for example, 1 part by mass or more, 3 parts by mass or more, or 5 parts by mass or more.

<Silane coupling agent>

Silica is preferably used in combination with a silane coupling agent. Examples of the silane coupling agent include, but not particularly limited to, for example, sulfide-based silane coupling agents such as bis(3-triethoxysilylpropyl) disulfide, bis(3-triethoxysilylpropyl)tetrasulfide, and the like; mercapto-based silane coupling agents such as 3-mercaptopropyltrimethoxysilane, 3-mercaptopropyltriethoxysilane, 2-mercaptoethyltrimethoxysilane, 2-mercaptoethyltriethoxysilane, and the like; vinyl-based silane coupling agents such as vinyltriethoxysilane, vinyltrimethoxysilane, and the like; amino-based silane coupling agents such as 3-aminopropyltriethoxysilane, 3-aminopropyltrimethoxysilane, 3-(2-aminoethyl)aminopropyltriethoxysilane, and the like; glycidoxy-based silane coupling agents such as $\gamma$-glycidoxypropyltriethoxysilane, $\gamma$-glycidoxypropyltrimethoxysilane, and the like; nitro-based silane coupling agents such as 3-nitropropyltrimethoxysilane, 3-nitropropyltriethoxysilane, and the like; chloro-based silane coupling agents such as 3-chloropropyltrimethoxysilane, 3-chloropropyltriethoxy, and the like. Among them, sulfide-based silane coupling agents and/or mercapto-based silane coupling agents are preferably compounded. As the silane coupling agent, for example, those commercially available from Evonik Industries AG, Momentive Performance Materials, etc. can be used. These silane coupling agents may be used alone, or two or more thereof may be used in combination.

A content of a silane coupling agent is preferably greater than 3 parts by mass, more preferably greater than 6 parts by mass, further preferably greater than 9 parts by mass, based on 100 parts by mass of silica, from the viewpoint of enhancing dispersibility of silica. Moreover, it is preferably less than 30 parts by mass, more preferably less than 20 parts by mass, further preferably less than 15 parts by mass, based on 100 parts by mass of silica, from the viewpoints of cost and processability.

A content of a silane coupling agent based on 100 parts by mass of the rubber component (a total amount of a plurality of silane coupling agents when used in combination) is preferably greater than 1 part by mass, more preferably greater than 2 parts by mass, further preferably 3 parts by mass or more, from the viewpoint of enhancing dispersibility of silica. Moreover, it is preferably less than 15 parts by mass, more preferably less than 10 parts by mass, particularly preferably less than 5 parts by mass, from the viewpoint of preventing deterioration of abrasion resistance.

[Rubber powder]

The rubber composition relating to the present embodiment comprises a rubber powder that comprises a sulfur element. As the rubber powder, a commercially available rubber powder prepared by pulverizing a used tire using a roll machine, grinder, or the like and then sieving it into a predetermined particle size may be used, or a rubber powder prepared by vulcanizing, pulverizing, and sieving a separately compounded rubber composition may be used. As the rubber powder, from the viewpoints of environmental considerations and costs, a recycled rubber powder produced from a pulverized product of a waste tire or the like is preferable. The rubber powder may be used alone, or two or more thereof may be used in combination.

The rubber powder may be an unmodified or modified rubber powder.

Examples of a method of producing a rubber powder by vulcanizing, pulverizing, and sieving a separately compounded rubber composition include, for example, the method disclosed in JP 2023-113413 A.

As the commercially available rubber powder, for example, products from Tire Recycling Solutions, Lehigh Technologies, Muraoka Rubber Reclaiming Co., Ltd., etc. can be used.

A content of a sulfur element in a rubber powder is preferably 0.1 % by mass or more, more preferably 0.3% by mass or more, further preferably 0.5% by mass or more. Moreover, the content of the sulfur element in the rubber powder is preferably 5.0% by mass or less, more preferably 4.5% by mass or less, further preferably 4.0% by mass or less.

A particle size of a rubber powder is 40 mesh or more, preferably 50 mesh or more, from the viewpoint of the effect of the present invention. Moreover, the particle size of the rubber powder is preferably 300 mesh or less, more preferably 250 mesh or less, further preferably 200 mesh or less, further preferably 150 mesh or less, particularly preferably 100 mesh or less, from the viewpoint of dispersibility.

A BET specific surface area B of a rubber powder is 0.100 $m^2$/g or more, preferably 0.110 $m^2$/g or more, more preferably 0.115 $m^2$/g or more, from the viewpoint of improving a reinforcing effect. Moreover, the BET specific surface area B of the rubber powder is preferably 0.200 $m^2$/g or less, more preferably 0.150 $m^2$/g or less, further preferably 0.130 $m^2$/g or less.

A content A of a rubber powder based on 100 parts by mass of the rubber component is preferably 3 parts by mass or more, more preferably 5 parts by mass or more, further preferably 8 parts by mass or more, further preferably 10 parts by mass or more, further preferably 15 parts by mass or more, particularly preferably 20 parts by mass or more, from the viewpoint of the effects of the present invention. Moreover, the content A of the rubber powder is preferably 100 parts by mass or less, more preferably 80 parts by mass or less, further preferably 60 parts by mass or less.

[Other compounding agents]

The rubber composition can appropriately comprise compounding agents conventionally and commonly used in the tire industry, for example, a plasticizing agent, processing aid, wax, stearic acid, zinc oxide, an antioxidant, a vulcanizing agent, a vulcanization accelerator, and the like, in addition to the rubber components, the fillers, and the rubber powders.

<Plasticizing agent>

The plasticizing agent is a material that imparts plasticity to the rubber component, and has a concept that includes both a plasticizing agent in a liquid state at 25°C and a plasticizing agent that is solid at 25°C. Examples of the plasticizing agent include, resin, oil, a liquid rubber, an ester-based plasticizing agent, and the like. These plasticizing agents may be ones derived from mineral resources such as petroleum, a natural gas, and the like, or naphtha-derived ones recycled from a rubber product or a non-rubber product. Moreover, low-molecular-weight hydrocarbon components obtained by pyrolyzing used tires or products containing these agents and performing extraction from the pyrolysate may be used as plasticizing agents. The plasticizing agent may be used alone, or two or more thereof may be used in combination.

(Resin)

Among the other compounding agents described above, the rubber composition preferably comprises resin. Resin is not particularly limited, but can be used as resin commonly used in the tire industry, examples of which include, for example, an aromatic vinyl-based resin, a dicyclopentadiene-based resin, a C9-based resin, a C5-based resin, a C5/C9-based resin, a terpene-based resin, a rosin-based resin, a phenol-based resin, and the like. Among them, an aromatic vinyl-based resin, a dicyclopentadiene-based resin, a C9-based resin, and a terpene-based resin are preferable. Resin may be used alone, or two or more thereof may be used in combination.

<<Aromatic vinyl-based resin>>

An "aromatic vinyl-based resin" refers to resin comprising at least one aromatic vinyl compound selected from the group consisting of styrene, α-methylstyrene, vinyltoluene, p-chlorostyrene, and the like as a monomer component having the largest content, and may be one obtained by hydrogenating or modifying them. As the aromatic vinyl-based resin, a homopolymer of α-methylstyrene or styrene or a copolymer of α-methylstyrene and styrene is preferable, and a copolymer of α-methylstyrene and styrene is more preferable, because it is economical, easy to process, and excellent in heat generation. As the aromatic vinyl-based resin, for example, those commercially available from Kraton Corporation, Eastman Chemical Company, Mitsui Chemicals, Inc., etc. can be used. These aromatic vinyl-based resins may be used alone, or two or more thereof may be used in combination.

<<Dicyclopentadiene-based resin>>

A "dicyclopentadiene-based resin" refers to resin comprising dicyclopentadiene (DCPD) as a monomer component having the largest content and may be one obtained by hydrogenating or modifying it. Examples of the dicyclopentadiene-based resin include, for example, a DCPD/C9 resin obtained by copolymerizing dicyclopentadiene with the C9 fraction, and the like. Among them, a DCPD/C9 resin is preferable. As the DCPD resin, for example, those commercially available from Exxon Mobil Corporation, ENEOS Corporation, Zeon Corporation, Maruzen Petrochemical Co., Ltd., etc. can be used. These dicyclopentadiene-based resins may be used alone, or two or more thereof may be used in combination.

<<C9-based resin>>

A "C9-based resin" refers to resin obtained by polymerizing C9 fractions and may be resin obtained by polymerizing a C9 fraction alone or a copolymer obtained by copolymerizing a C9 fraction with other components. For example, resin obtained by copolymerizing dicyclopentadiene (DCPD) with a C9 fraction is referred to as a DCPD/C9 resin. Moreover, it may be one obtained by hydrogenating or modifying them. Examples of the C9 fraction include, for example, a petroleum fraction having 8 to 10 carbon atoms, which is at least one selected from the group consisting of vinyltoluene, alkylstyrene, coumarone, indene, methylindene, dicyclopentadiene, and the like. Specific examples of the C9-based resin include, for example, a coumarone-indene resin, a coumarone resin, an indene resin, and the like. These C9-based resins may be used alone, or two or more thereof may be used in combination.

<<C5-based resin>>

A "C5-based resin" refers to resin obtained by polymerizing a C5 fraction other than dicyclopentadiene, and may be one obtained by hydrogenating or modifying them. Examples of the C5 fraction other than dicyclopentadiene include, for example, a petroleum fraction having 4 to 5 carbon atoms, which is at least one selected from the group consisting of cyclopentadiene, isoprene, pentane, isopentane, neopentane, pentene, pentadiene, and the like. These C5-based resins may be used alone, or two or more thereof may be used in combination.

<<C5/C9-based resin>>

A "C5/C9-based resin" refers to resin obtained by copolymerizing the C5 fraction and the C9 fraction and may be one obtained by hydrogenating or modifying them. As the C5/C9-based resin, for example, those commercially available from Tosoh Corporation, Zibo Luhua Hongjin New Material Group Co., Ltd, etc. can be appropriately used. These C5/C9-based resins may be used alone, or two or more thereof may be used in combination.

<<Terpene-based resin>>

The terpene-based resin refers to a resin comprising a terpene compound of at least one selected from the group consisting of such as $\alpha$-pinene, $\beta$-pinene, limonene, dipentene, and the like as a monomer component having the largest content, and may be one obtained by hydrogenating or modifying them. Specific examples of the terpene-based resin include, for example, a polyterpene resin comprising only one or more of the terpene compounds as monomer components; an aromatic-modified terpene resin comprising the terpene compound and an aromatic compound as monomer components; a terpene phenolic resin comprising the terpene compound and a phenol-based compound as monomer components; and the like. Examples of the aromatic compound used as a monomer component for the aromatic-modified terpene resin include, for example, at least one selected from the group consisting of styrene, $\alpha$-methylstyrene, vinyltoluene, divinyltoluene, and the like. Examples of the phenol-based compound used as a monomer component for the terpene phenolic resin include, for example, at least one selected from the group consisting of phenol, bisphenol A, cresol, xylenol, and the like. These terpene-based resins may be used alone, or two or more thereof may be used in combination.

<<Rosin-based resin>>

The rosin-based resin refers to resin comprising a rosin acid compound of at least one selected from the group consisting of abietic acid, neoabietic acid, palustric acid, isopimaric acid, and the like, and may be one obtained by hydrogenating or modifying them. Example of the rosin-based resin include, but not particularly limited to, for example, a natural resin rosin and a rosin-modified resin obtained by modifying it by hydrogenation, disproportionation, dimerization, esterification, etc., and the like. These rosin-based resins may be used alone, or two or more thereof may be used in combination.

<<Phenol-based resin>>

A phenol-based resin refers to resin comprising a phenolic compound such as phenol, cresol, and the like as a monomer component having the largest content. Examples of the phenol-based resin include, but not particularly limited to, a phenol formaldehyde resin, an alkylphenol formaldehyde resin, an alkylphenol acetylene resin, an oil-modified phenol formaldehyde resin, and the like. These phenol-based resins may be used alone, or two or more thereof may be used in combination.

<<Content>>

A content of resin when compounded based on 100 parts by mass of the rubber component is preferably greater than 1 part by mass, more preferably greater than 3 parts by mass, further preferably greater than 5 parts by mass, from the viewpoint of wet grip performance. On the other hand, the content is preferably less than 40 parts by mass, more preferably less than 30 parts by mass, further preferably less than 20 parts by mass, from the viewpoint of suppressing heat generation.

(Plasticizing agent other than resin)

Oil, a liquid rubber, and an ester-based plasticizing agent that are plasticizing agents other than resin will be described.

(Oil)

Examples of oil include, for example, a mineral oil, a vegetable oil, an animal oil, and the like. Moreover, from the viewpoint of life cycle assessment, those obtained by purifying a waste oil after being used in a rubber mixer or an engine, or a waste cooking oil used in a restaurant may be used. Oil may be used alone, or two or more thereof may be used in combination.

In the present specification, a mineral oil refers to oil derived from mineral resources such as petroleum, a natural gas, and the like. Examples of the mineral oil include paraffinic oils (mineral oils), naphthenic oils, aromatic oils, and the like. Specific examples of the mineral oil include, for example, MES (Mild Extracted Solvate), DAE (Distillate Aromatic Extract), TDAE (Treated Distillate Aromatic Extract), TRAE (Treated Residual Aromatic Extract), RAE (Residual al Aromatic Extract), and the like. Moreover, as an environmental measure, an oil having a low content of a polycyclic aromatic compound (PCA) can also be used. Examples of the oil having a low content of a PCA content include MES, TDAE, a heavy naphthenic oil, and the like.

In the present specification, examples of the vegetable oil include, for example, a linseed oil, a rapeseed oil, a safflower oil, a soybean oil, a corn oil, a cottonseed oil, a rice oil, a tall oil, a sesame oil, a perilla oil, a castor oil, a tung oil, a pine oil, a pine tar oil, a sunflower oil, a coconut oil, a palm oil, a palm kernel oil, an olive oil, a camellia oil, a jojoba oil, a macadamia nut oil, a peanut oil, a grapeseed oil, a Japan wax, and the like. Furthermore, examples of the vegetable oil also include a refined oil obtained by refining the above-described oil (a salad oil, etc.), a transesterified oil obtained by transesterifying the above-described oil, a hydrogenated oil obtained by hydrogenating the above-described oil, a thermally polymerized oil obtained by thermally polymerizing the above-described oil, an oxidized polymerized oil obtained by oxidizing the above-described oil, a waste cooking oil obtained by recovering what was utilized as an edible oil, etc., and the like. Besides, the vegetable oil may be liquid or solid at 25°C.

A content of oil when compounded based on 100 parts by mass of the rubber component is preferably greater than 1 part by mass, more preferably greater than 5 parts by mass, further preferably greater than 10 parts by mass, particularly preferably greater than 12 parts by mass, from the viewpoint of processability. Moreover, the content is preferably less than 50 parts by mass, more preferably less than 30 parts by mass, further preferably less than 20 parts by mass.

(Liquid rubber)

A liquid rubber is not particularly limited as long as it is a polymer in a liquid state at 25°C, examples of which include, for example, a liquid butadiene rubber (a liquid BR), a liquid styrene-butadiene rubber (a liquid SBR), a liquid isoprene rubber (a liquid IR), a liquid styrene-isoprene rubber (a liquid SIR), a liquid farnesene rubber, and the like. The liquid rubber may be used alone, or two or more thereof may be used in combination.

(Ester-based plasticizing agent)

Examples of the ester-based plasticizing agent include, for example, dibutyl adipate (DBA), diisobutyl adipate (DIBA), dioctyl adipate (DOA), bis(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. The ester-based plasticizing agent may be used alone, or two or more thereof may be used in combination.

A content of a plasticizing agent based on 100 parts by mass of the rubber component (a total amount of a plurality of plasticizing agents when used in combination) is preferably greater than 5 parts by mass, more preferably greater than 10 parts by mass, further preferably greater than 12 parts by mass, particularly preferably greater than 14 parts by mass. Moreover, it is preferably less than 60 parts by mass, more preferably less than 50 parts by mass, further preferably less than 30 parts by mass, from the viewpoint of processability. Besides, the content of the plasticizing agent also includes an amount of an extending plasticizing agent such as an extending oil, an extended resin, an extended liquid rubber component, and an extended ester-based plasticizing agent, and the like used to extend the rubber component.

(Processing aid)

Examples of processing aid include, for example, a fatty acid metal salt, a fatty acid amide, an amide ester, a silica surface active agent, a mixture of a fatty acid metal salt and an amide ester, a mixture of a fatty acid metal salt and a fatty acid amide, and the like. These processing aid may be used alone, or two or more thereof may be used in combination. As processing aid, for example, those commercially available from Schill+Seilacher GmbH, Performance Additives, etc. can be used.

A content of processing aid when compounded based on 100 parts by mass of the rubber component is preferably greater than 0.5 parts by mass, more preferably greater than 1 part by mass, further preferably greater than 1.5 parts by mass, from the viewpoint of exhibiting an effect of improving processability. Moreover, it is preferably less than 10 parts by mass, more preferably less than 8.0 parts by mass, further preferably less than 5.0 parts by mass, from the viewpoints of abrasion resistance and breaking strength.

(Wax)

Wax is not particularly limited, and any of those commonly used in the tire industry can be appropriately used, examples of which include, for example, a mineral-based wax, a plant-derived wax, and the like. The mineral-based wax refers to wax derived from mineral resources such as oil, a natural gas, and the like. The plant-derived wax refers to wax derived from natural resources such as a plant and the like. Among them, the mineral-based wax is preferable. Examples of the plant-derived wax include, for example, a rice wax, a carnauba wax, a candelilla wax, and the like. Examples of the mineral-based wax include, for example, a paraffin wax, a microcrystalline wax, specially selected waxes thereof, and the like. Among them, a paraffin wax is preferable. Besides, wax relating to the present embodiment shall not comprise stearic acid. As wax, for example, those commercially available from Ouchi Shinko Chemical Industry Co., Ltd., Nippon Seiro Co., Ltd., Paramelt B.V., etc. can be used. Wax may be used alone, or two or more thereof may be used in combination.

A content of wax when compounded based on 100 parts by mass of the rubber component is preferably greater than 0.5 parts by mass, more preferably greater than 1.0 parts by mass, further preferably greater than 1.5 parts by mass, from the viewpoint of weather resistance of a rubber. Moreover, it is preferably less than 10 parts by mass, more preferably less than 7.0 parts by mass, further preferably less than 5.0 parts by mass, from the viewpoint of preventing whitening of a tire due to bloom.

(Antioxidant)

Examples of an antioxidant include, but not particularly limited to, a naphthylamine-based antioxidant such as phenyl-$\alpha$-naphthylamine and the like; a diphenylamine-based antioxidant such as an octylated diphenylamine, 4,4'-bis($\alpha,\alpha$'-dimethylbenzyl)diphenylamine, and the like; p-phenylenediamine-based antioxidant such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), N,N'-di-2-naphthyl-p-phenylenediamine (DNPD), and the like; a quinoline-based antioxidant such as a polymer of 2,2,4-trimethyl-1,2-dihydroquinoline and the like; a monophenol-based antioxidant such as 2,6-di-t-butyl-4-methylphenol, a styrenated phenol, and the like; bis-, tris-, and polyphenol-based antioxidants such as tetrakis-[methylene-3-(3',5'-di-t-butyl-4'-hydroxyphenyl)propionate]methane and the like. Among them, p-phenylenediamine-based antioxidants and quinoline-based antioxidants are preferable, and polymers of N-(1,3-dimethylbutyl)-N'-phenyl-p-phenylenediamine and 2,2,4-trimethyl-1,2-dihydroquinoline are more preferable. As commercially available products, for example, products manufactured by Seiko Chemical Co., Ltd., Sumitomo Chemical Co., Ltd., Ouchi Shinko Chemical Industry Co., Ltd., Flexsys, etc. can be used. The antioxidant may be used alone, or two or more thereof may be used in combination.

A content of an antioxidant when compounded based on 100 parts by mass of the rubber component is preferably greater than 0.5 parts by mass, more preferably greater than 1.0 parts by mass, further preferably greater than 1.4 parts by mass, from the viewpoint of ozone crack resistance of a rubber. Moreover, it is preferably less than 2.5 parts by mass, more preferably less than 2.0 parts by mass, further preferably less than 1.8 parts by mass, from the viewpoints of abrasion resistance and wet grip performance.

(Stearic acid)

A content of stearic acid when compounded based on 100 parts by mass of the rubber component is preferably greater than 0.5 parts by mass, more preferably greater than 1.0 parts by mass, further preferably greater than 1.5 parts by mass, from the viewpoint of processability. Moreover, it is preferably less than 10 parts by mass, more preferably less than 8.0 parts by mass, further preferably less than 5.0 parts by mass, from the viewpoint of vulcanization rate.

(Zinc oxide)

A content of zinc oxide when compounded based on 100 parts by mass of the rubber component is preferably greater than 0.5 parts by mass, more preferably greater than 1.0 parts by mass, further preferably greater than 1.5 parts by mass, from the viewpoint of processability. Moreover, it is preferably less than 10 parts by mass, more preferably less than 8.0 parts by mass, further preferably less than 5.0 parts by mass, from the viewpoint of abrasion resistance.

(Vulcanizing agent)

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used. The vulcanizing agent may be used alone, or two or more thereof may be used in combination.

A content of sulfur when compounded based on 100 parts by mass of the rubber component is preferably greater than 0.5 parts by mass, more preferably greater than 0.8 parts by mass, further preferably greater than 1.2 parts by mass, from the viewpoint of securing a sufficient vulcanization reaction. Moreover, it is preferably less than 5.0 parts by mass, more preferably less than 4.0 parts by mass, further preferably less than 3.0 parts by mass, from the viewpoint of preventing deterioration. Besides, a content of a vulcanizing agent when an oil-containing sulfur is used as the vulcanizing agent shall be a total content of pure sulfur comprised in the oil-containing sulfur.

As a vulcanizing agent other than sulfur, a known organic cross-linking agent can also be used. The organic cross-linking agent is not particularly limited as long as it can form cross-linked chains other than a polysulfide bond, examples of which, include, for example, an alkylphenol-sulfur chloride condensate, sodium hexamethylene-1,6-bisthiosulfate dihydrate, 1,6-bis(N,N'-dibenzylthiocarbamoyldithio)hexane, dicumylperoxide, and the like. Among them, 1,6-bis(N,N'-dibenzylthiocarbamoyldithio)hexane is preferable. As these organic cross-linking agents, those commercially available from Taoka Chemical Co., Ltd., LANXESS, Flexsys, etc. can be used.

(Vulcanization accelerator)

Examples of a vulcanization accelerator include, but not particularly limited to, for example, a sulfenamide-based vulcanization accelerator, a thiazole-based vulcanization accelerator, a guanidine-based vulcanization accelerator, a thiuram-based vulcanization accelerator, a thiourea-based vulcanization accelerator, a dithiocarbamic acid-based vulcanization accelerator, an aldehyde-amine-based vulcanization accelerator, an aldehyde-ammonia-based vulcanization accelerator, an imidazoline-based vulcanization accelerator, a xanthate-based vulcanization accelerator, a caprolactam disulfide, and the like. These vulcanization accelerators may be used alone, or two or more thereof may be used in combination. Among them, one or more vulcanization accelerators selected from the group consisting of a sulfenamide-based vulcanization accelerator, a thiazole-based vulcanization accelerator, and a guanidine-based vulcanization accelerator are preferable, from the viewpoint that desired effects can be obtained more appropriately. The vulcanization accelerator may be used alone, or two or more thereof may be used in combination.

Examples of a sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like.

Examples of the thiazole-based vulcanization accelerator include, for example, 2-mercaptobenzothiazole (MBT) or a salt thereof, di-2-benzothiazolyl disulfide (MBTS), 2-(2,4-dinitrophenyl)mercaptobenzothiazole, 2-(2,6-diethyl-4-morpholinothio)benzothiazole, and the like.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like.

Examples of the thiuram-based vulcanization accelerator include, for example, tetrakis(2-ethylhexyl)thiuram disulfide (TOT-N), tetramethylthiuram disulfide (TMTD), tetraethylthiuram disulfide, tetramethylthium monosulfide (TMTM), dipentamethylene thiuram disulfide, dipentamethylene thiuram tetrasulfide, and the like.

Examples of the thiourea-based vulcanization accelerator include, for example, thiourea compounds such as thiocarbamide, diethylthiourea, dibutylthiourea, trimethylthiourea, diorthotolylthiourea, and the like, N,N'-diphenylthiourea, trimethylthiourea, N,N'-diethylthiourea, and the like.

Examples of the dithiocarbamate-based vulcanization accelerator include, for example, piperidinium pentamethylene dithiocarbamate (PPDC), zinc dimethyldithiocarbamate (ZnMDC), zinc diethyldithiocarbamate (ZnEDC), zinc dibutyldithiocarbamate (ZnBDC), zinc dibenzyldithiocarbamate (ZDBzC), zinc N-ethyl-N-phenyldithiocarbamate (ZnEPDC), zinc N-pentamethylene dithiocarbamate (ZnPDC), sodium dibutyldithiocarbamate (NaBDC), copper dimethyldithiocarbamate (CuMDC), iron dimethyldithiocarbamate (FeMDC), tellurium diethyldithiocarbamate (TeEDC), and the like.

A content of a vulcanization accelerator when compounded based on 100 parts by mass of the rubber component (a total amount of all of a plurality of vulcanization accelerators when used in combination) is preferably greater than 1.0 parts by mass, more preferably greater than 1.5 parts by mass, further preferably 2.0 parts by mass or more. Moreover, the content of the vulcanization accelerator based on 100 parts by mass of the rubber component is preferably less than 8.0 parts by mass, more preferably less than 5.0 parts by mass, further preferably less than 4.0 parts by mass.

In the present specification, various materials comprising carbon atoms (for example, a rubber, oil, resin, a vulcanization accelerator, an antioxidant, a surfactant, etc.) may be derived from carbon dioxide in the atmosphere. As a method of obtaining the various materials from carbon dioxide, carbon dioxide may be directly converted, or methane obtained through a methanation step for synthesizing methane from carbon dioxide may be converted.

[Production]

The rubber composition can be produced by a known method. For example, it can be produced by kneading each of the above-described components using a rubber kneading apparatus such as an open roll, a closed type kneader (Bunbury mixer, kneader, etc.), and the like.

The kneading step includes, for example, a base kneading step of kneading compounding agents and additives other than vulcanizing agents and vulcanization accelerators and a final kneading (F kneading) step of adding vulcanizing agents and vulcanization accelerators to the kneaded product obtained by the base kneading step and kneading them. Furthermore, the base kneading step can be divided into a plurality of steps, if desired. In the case where the base kneading step is divided, the method may be (1) a method of kneading some of compounding agents and additives in advance into a masterbatch, and then adding the remaining compounding agents and additives to the obtained masterbatch and kneading them, (2) a method of kneading all of the compounding agents and additives in the base kneading step at once, and then remilling the kneaded product one or more times, or the like. In the above-described method (1), the number of masterbatches is not limited and may be two or more. Moreover, when the number of masterbatches is two or more, all of the compounding agents and additives used in the base kneading step may be allocated to any of the masterbatches.

A kneading condition is not particularly limited. Examples of kneading include, for example, in the base kneading step, a method of kneading at a discharge temperature of 150 to 170°C for 3 to 10 minutes, and in the final kneading step, a method of kneading at 70 to 110°C for 1 to 5 minutes. A vulcanization condition is not particularly limited. Examples of vulcanization include, for example, a method of vulcanizing at 150 to 200°C for 10 to 30 minutes.

The tire relating to the present embodiment can be produced by a usual method using the above-described rubber composition. That is, the tire can be produced by extruding the above-described rubber composition in an unvulcanized state into a shape of a tread part with an extruder equipped with a mouthpiece having a predetermined shape, attaching it together with other tire members while adjusting them to have a predetermined tire structure, on a tire forming machine, and molding them by a usual method to form an unvulcanized tire, followed by heating and pressurizing this unvulcanized tire in a vulcanizing machine. A vulcanization condition is not particularly limited. Examples of vulcanization include, for example, a method of vulcanizing at 140 to 170°C for 10 to 40 minutes.

[Applications]

The tire relating to the present embodiment can be used for any applications, regardless of whether it is a pneumatic tire or a non-pneumatic tire, and can be used as a tire for a passenger car, a tire for a large passenger car, a tire for a large SUV, a racing tire, a motorcycle tire, a heavy-duty tire, or a run flat tire. Among them, it is preferably a tire for a passenger car. Besides, the tire for a passenger car is a tire on the premise that it is mounted on a car running on four wheels and refers to one having a maximum load capacity of less than 1400 kg. Moreover, the tire relating to the present embodiment can be used as an all-season tire, a summer tire, or a winter tire such as a studless tire and the like.

EXAMPLES

Examples considered to be preferable in implementation (Examples) are shown below, though the scope of the present invention is not limited to Examples. Results calculated based on the following evaluation methods considering a rubber composition and a tire obtained according to each Table using various chemicals shown below are shown in Tables 1 and 2.

<Various chemicals>

Chemicals used in Examples and Comparative examples are collectively described below.

NR: TSR20

BR: UBEPOL BR (Registered Trademark) 150B manufactured by UBE Corporation (unmodified BR, cis content: 97 mol%, Mw: 440,000)

Carbon black 1: VULCAN6 (N220, manufactured by Cabot Japan K.K., BET specific surface area: 114 $m^2$/g)

Carbon black 2: VULCAN10H (N134, manufactured by Cabot Japan K.K., BET specific surface area: 143 $m^2$/g)

Rubber powder 1: Tyrexol CW50 manufactured by Tyre Recycling Solutions (rubber powder comprising sulfur element, 50 mesh, BET specific surface area: 0.115 $m^2$/g)

Rubber powder 2: MicroDyne 400 manufactured by Lehigh Technologies (40 mesh, BET specific surface area: 0.066 $m^2$/g)

Oil: Diana Process Oil AH-40 manufactured by Idemitsu Kosan Co., Ltd. (aromatic process oil)

Stearic acid: Bead stearic acid "CAMELLIA" manufactured by NOF CORPORATION

Zinc oxide: Zinc oxide No. 1 manufactured by Mitsui Mining & Smelting Co., Ltd.

Antioxidant: Nocrac 6C manufactured by Ouchi Shinko Chemical Industry Co., Ltd. (N-(1,3-dimethylbutyl)-N'-phenyl-p-phenylenediamine)

Wax: SUNNOC N manufactured by Ouchi Shinko Chemical Industry Co., Ltd.

Sulfur: Powdered sulfur manufactured by Tsurumi Chemical Industry Co., Ltd.

Vulcanization accelerator: Nocceler CZ manufactured by Ouchi Shinko Chemical Industry Co., Ltd. (CBS, N-cyclohexyl-2-benzothiazolylsulfenamide)

(Examples and Comparative examples)

According to the compounding formulations shown in Tables 1 and 2, using a 1.7 L closed Banbury mixer, all chemicals other than sulfur and vulcanization accelerators are kneaded until a temperature reaches a discharge temperature at 150°C to 160°C for 1 to 10 minutes to obtain a kneaded product. Next, using a twin-screw open roll, sulfur and vulcanization accelerators are added to the obtained kneaded product, and the mixture is kneaded for 4 minutes until the temperature reaches 105°C to obtain an unvulcanized rubber composition. The obtained unvulcanized rubber composition is molded into a shape of a tread part, and attached together with other tire members, preparing an unvulcanized tire, followed by press-vulcanized for 35 minutes under a condition at 150°C to obtain each test tire described in Tables 1 and 2.

<Abrasion resistance>

For each vulcanized rubber test piece produced by being cut out with 20 mm in length $\times$ 4 mm in width $\times$ 1 mm in thickness from a tread part of each test tire so that a tire circumferential direction becomes a long side, using an LAT tester (Laboratory Abrasion and Skid Tester), a weight loss of each test piece is measured under a condition of a load of 100N, a speed of 20 km/h, and a slip angle of 6°, and abrasion resistance of each tire is indicated as an index by the following equation. The results show that the larger the index is, the more excellent the abrasion resistance is. The reference Comparative example is referred to as Comparative example 1 in Table 1 and Comparative example 8 in Table 2.

Abrasion resistance = (weight loss in reference Comparative example) / (weight loss of each test piece) $\times$ 100

<Ride comfort>

Each test tire is filled with 250 kPa of air and mounted on an automobile having a displacement of 2000 cc. This automobile is made to run at a speed of 100 km/h on a test course whose road surface is asphalt, and ride comfort is sensory evaluated by test drivers. The evaluation is performed using an integer value of 1 to 5 points, and based on evaluation criteria that the higher the score is, the more excellent the ride comfort is, a total score by ten test drivers is calculated. A total score of the reference Comparative examples is converted into a reference value (100), and an evaluation result for each test tire is indicated as an index in proportion to the total score. The reference Comparative example is referred to as Comparative example 1 in Table 1 and Comparative example 8 in Table 2.

<Overall performance>

A total value of abrasion resistance and ride comfort as described above is shown as an overall performance index.

Table 1

| | Example | | | | Comparative example | | | | |
|---|---|---|---|---|---|---|---|---|---|
| | 1 | 2 | 3 | 4 | 1 | 2 | 3 | 4 | 5 |
| Compounding amount (part by mass) | | | | | | | | | |
| NR | 40 | 40 | 40 | 40 | 40 | 40 | 40 | 40 | 40 |
| BR | 60 | 60 | 60 | 60 | 60 | 60 | 60 | 60 | 60 |
| Carbon black 1 | 55 | 55 | - | - | 55 | 15 | 55 | 55 | 50 |
| Carbon black 2 | - | - | 55 | 55 | - | - | - | - | - |
| Rubber powder 1 | 10 | 25 | 10 | 10 | - | 10 | 10 | - | 50 |
| Rubber powder 2 | - | - | - | - | 10 | - | - | 80 | - |
| Oil | 15 | 15 | 15 | 15 | 15 | 15 | 15 | 15 | 15 |
| Stearic acid | 2.0 | 2.0 | 2.0 | 2.0 | 2.0 | 2.0 | 2.0 | 2.0 | 2.0 |
| Zinc acid | 1.5 | 1.5 | 1.5 | 1.5 | 1.5 | 1.5 | 1.5 | 1.5 | 1.5 |
| Antioxidant | 2.0 | 2.0 | 2.0 | 2.0 | 2.0 | 2.0 | 2.0 | 2.0 | 2.0 |
| Wax | 1.5 | 1.5 | 1.5 | 1.5 | 1.5 | 1.5 | 1.5 | 1.5 | 1.5 |
| Sulfur | 1.5 | 1.5 | 1.5 | 1.5 | 1.5 | 1.5 | 1.5 | 1.5 | 1.5 |
| Vulcanization accelerator | 1.8 | 1.8 | 1.8 | 1.8 | 1.8 | 1.8 | 1.8 | 1.8 | 1.8 |
| Thickness T of tread part (mm) | 3.5 | 3.5 | 3.5 | 5.0 | 3.5 | 3.5 | 2.5 | 3.5 | 3.5 |
| Content A of rubber powder (part by mass) | 10 | 25 | 10 | 10 | 10 | 10 | 10 | 80 | 50 |
| BET specific surface area B of rubber powder ($m^2/g$) | 0.115 | 0.115 | 0.115 | 0.115 | 0.066 | 0.115 | 0.115 | 0.066 | 0.115 |
| Content C of carbon black (part by mass) | 55 | 55 | 55 | 55 | 55 | 15 | 55 | 55 | 50 |
| BET specific surface area E of carbon black ($m^2/g$) | 114 | 114 | 143 | 143 | 114 | 114 | 114 | 114 | 114 |
| A/T | 2.9 | 7.1 | 2.9 | 2.0 | 2.9 | 2.9 | 4.0 | 22.9 | 14.3 |
| $(C \times E)/(A \times B)$ | 5452 | 2181 | 6839 | 6839 | 9500 | 1487 | 5452 | 1188 | 991 |
| $C \times T$ | 193 | 193 | 193 | 275 | 193 | 53 | 138 | 193 | 175 |
| Evaluation | | | | | | | | | |
| Abrasion resistance | 106 | 103 | 107 | 107 | 100 | 82 | 102 | 78 | 82 |
| Ride comfort | 103 | 103 | 108 | 111 | 100 | 89 | 89 | 89 | 92 |
| Overall performance | 209 | 206 | 215 | 218 | 200 | 171 | 191 | 167 | 174 |

Table 2

| | Example | Comparative example | | |
|---|---|---|---|---|
| | 5 | 6 | 7 | 8 |
| Compounding amount (part by mass) | | | | |
| NR | 40 | 40 | 40 | 40 |
| BR | 60 | 60 | 60 | 60 |
| Carbon black 1 | 50 | 15 | 50 | 15 |
| Carbon black 2 | - | - | - | - |
| Rubber powder 1 | 45 | 45 | 45 | 45 |
| Rubber powder 2 | - | - | - | - |

(continued)

| | Example | Comparative example | | |
|---|---|---|---|---|
| | 5 | 6 | 7 | 8 |
| Compounding amount (part by mass) | | | | |
| Oil | 15 | 15 | 15 | 15 |
| Stearic acid | 2.0 | 2.0 | 2.0 | 2.0 |
| Zinc acid | 1.5 | 1.5 | 1.5 | 1.5 |
| Antioxidant | 2.0 | 2.0 | 2.0 | 2.0 |
| Wax | 1.5 | 1.5 | 1.5 | 1.5 |
| Sulfur | 1.5 | 1.5 | 1.5 | 1.5 |
| Vulcanization accelerator | 1.8 | 1.8 | 1.8 | 1.8 |
| Thickness T of tread part (mm) | 3.0 | 2.0 | 2.0 | 3.0 |
| Content A of rubber powder (part by mass) | 45 | 45 | 45 | 45 |
| BET specific surface area B of rubber powder ($m^2$/g) | 0.115 | 0.115 | 0.115 | 0.115 |
| Content C of carbon black (part by mass) | 50 | 15 | 50 | 15 |
| BET specific surface area E of carbon black ($m^2$/g) | 114 | 114 | 114 | 114 |
| A/T | 15.0 | 22.5 | 22.5 | 15.0 |
| (C×E)/(A×B) | 1101 | 330 | 1101 | 330 |
| C×T | 150 | 30 | 100 | 45 |
| Evaluation | | | | |
| Abrasion resistance | 108 | 94 | 99 | 100 |
| Ride comfort | 105 | 95 | 95 | 100 |
| Overall performance | 213 | 189 | 194 | 200 |

<Embodiments>

Examples of embodiments of the present invention will be shown below.

[1] A tire comprising a tread part,

wherein the tread part is composed of a rubber composition comprising a rubber component, carbon black, and a rubber powder,
wherein C is greater than 20, where C represents a content, in parts by mass, of carbon black based on 100 parts by mass of the rubber component in the rubber composition,
wherein the rubber powder comprises a sulfur element,
wherein the rubber powder has a particle size of 40 mesh or more,
wherein B is 0.100 or more, where B represents a BET specific surface area, in $m^2$/g, of the rubber powder,
wherein T is 3.0 or more, where T represents a thickness, in mm, of the tread part,
wherein A/T is less than 20, where A represents a content, in parts by mass, of the rubber powder based on 100 parts by mass of the rubber component in the rubber composition, and
wherein (C×E)/(A×B) is greater than 1000, preferably greater than 1500, where E represents a BET specific surface area, in $m^2$/g, of the carbon black.

[2] The tire of [1] above, wherein the A/T is less than 10.
[3] The tire of [1] or [2] above, wherein the (C×E)/(A×B) is greater than 2000, preferably greater than 2500, more preferably greater than 300.
[4] The tire of any one of [1] to [3] above, wherein, regarding the C and the T, C×T is greater than 100, preferably greater than 120, more preferably greater than 145, further preferably greater than 160.
[5] The tire of any one of [1] to [4] above, wherein the E, in $m^2$/g, is greater than 100, preferably greater than 110.
[6] The tire of any one of [1] to [5] above, wherein the rubber component comprises 30% by mass or more of an isoprene-based rubber.

[7] The tire of any one of [1] to [6] above, wherein the rubber component comprises 50% by mass or more of a butadiene rubber.

REFERENCE SIGNS LIST

1. Tread part
2. Cap rubber layer
4. Base rubber layer
7. Inner liner
8. Belt layer
9. Carcass
11. Band
CL. Tire equatorial plane
T. Thickness of tread part

**Claims**

1. A tire comprising a tread part,

   wherein the tread part is composed of a rubber composition comprising a rubber component, carbon black, and a rubber powder,
   wherein C is greater than 20, where C represents a content, in parts by mass, of carbon black based on 100 parts by mass of the rubber component in the rubber composition,
   wherein the rubber powder comprises a sulfur element,
   wherein the rubber powder has a particle size of 40 mesh or more,
   wherein B is 0.100 or more, where B represents a BET specific surface area, in $m^2/g$, of the rubber powder,
   wherein T is 3.0 or more, where T represents a thickness, in mm, of the tread part,
   wherein A/T is less than 20, where A represents a content, in parts by mass, of the rubber powder based on 100 parts by mass of the rubber component in the rubber composition, and
   wherein $(C \times E)/(A \times B)$ is greater than 1000, where E represents a BET specific surface area, in $m^2/g$, of the carbon black.

2. The tire of claim 1, wherein the A/T is less than 10.

3. The tire of claim 1 or 2, wherein the $(C \times E)/(A \times B)$ is greater than 2000.

4. The tire of any one of claims 1 to 3, wherein, regarding the C and the T, $C \times T$ is greater than 100.

5. The tire of any one of claims 1 to 4, wherein the E, in $m^2/g$, is greater than 100.

6. The tire of any one of claims 1 to 5, wherein the rubber component comprises 30% by mass or more of an isoprene-based rubber.

7. The tire of any one of claims 1 to 6, wherein the rubber component comprises 50% by mass or more of a butadiene rubber.

8. The tire of any one of claims 1 to 7, wherein the C is greater than 49.

9. The tire of any one of claims 1 to 8, wherein, regarding the C and the T, $C \times T$ is greater than 145.

10. The tire of any one of claims 1 to 9, wherein the rubber component comprises greater than 58% by mass of a butadiene rubber.

11. The tire of any one of claims 1 to 10, wherein the tread part has two layers: a cap rubber layer; and a base rubber layer adjacent to an inner side of the cap rubber layer 2 in a tire radial direction.

FIG. 1

Europäisches
Patentamt

European
Patent Office

Office européen
des brevets

## EUROPEAN SEARCH REPORT

**Application Number**

EP 25 16 9631

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 3 118 048 A1 (MICHELIN & CIE [FR]) 24 June 2022 (2022-06-24) * examples T2, T3, C2, C3; table 1 * ----- | 1-11 | INV. B60C1/00 B60C11/00 C08L9/00 |
| X | WO 2021/123574 A2 (MICHELIN & CIE [FR]) 24 June 2021 (2021-06-24) * example C2; table 1 * ----- | 1,4-6,8, 9 | |
| X | EP 3 558 713 B1 (MICHELIN & CIE [FR]) 18 November 2020 (2020-11-18) * examples C1-C3; table 2 * * table 1 * ----- | 1,4-6 | |

|  |  |
|---|---|
|  | TECHNICAL FIELDS SEARCHED (IPC) |
|  | B60C C08L |

The present search report has been drawn up for all claims

| Place of search | Date of completion of the search | Examiner |
|---|---|---|
| Munich | 12 August 2025 | Laïb, Samia |

EPO FORM 1503 03.82 (P04C01)

## ANNEX TO THE EUROPEAN SEARCH REPORT
## ON EUROPEAN PATENT APPLICATION NO.

EP 25 16 9631

This annex lists the patent family members relating to the patent documents cited in the above-mentioned European search report.
The members are as contained in the European Patent Office EDP file on
The European Patent Office is in no way liable for these particulars which are merely given for the purpose of information.

12-08-2025

| Patent document cited in search report | | Publication date | Patent family member(s) | | Publication date |
|---|---|---|---|---|---|
| FR 3118048 | A1 | 24-06-2022 | CN | 116635435 A | 22-08-2023 |
| | | | EP | 4267405 A1 | 01-11-2023 |
| | | | FR | 3118048 A1 | 24-06-2022 |
| | | | US | 2024059874 A1 | 22-02-2024 |
| | | | WO | 2022136750 A1 | 30-06-2022 |
| WO 2021123574 | A2 | 24-06-2021 | CN | 115298041 A | 04-11-2022 |
| | | | EP | 4076981 A2 | 26-10-2022 |
| | | | FR | 3105239 A1 | 25-06-2021 |
| | | | US | 2023028202 A1 | 26-01-2023 |
| | | | WO | 2021123574 A2 | 24-06-2021 |
| EP 3558713 | B1 | 18-11-2020 | CN | 110087901 A | 02-08-2019 |
| | | | EP | 3558713 A1 | 30-10-2019 |
| | | | FR | 3060591 A1 | 22-06-2018 |
| | | | US | 2020131342 A1 | 30-04-2020 |
| | | | WO | 2018115720 A1 | 28-06-2018 |

EPO FORM P0459

For more details about this annex : see Official Journal of the European Patent Office, No. 12/82

**EP 4 635 745 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023071373 A
- EP 3427975 A
- JP 6856781 B
- EP 3173251 A
- JP 2009002594 A
- JP 2023113413 A

**Non-patent literature cited in the description**

- *Rubber Chemistry and Technology*, 2012, vol. 85 (3), 408-449
- A comparison of surface morphology and chemistry of pyrolytic carbon blacks with commercial carbon blacks. *Powder Technology*, 2005, vol. 160, 190-193
- *Akita Prefectural University Web Journal B*, 2019, vol. 6, 216-222